# EUROPÄISCHE PATENTANMELDUNG

(11) **EP 0 540 903 A1**
(43) Veröffentlichungstag der Anmeldung: **12.05.1993**
(21) Anmeldenummer: 92117347.2
(22) Anmeldetag: 10.10.1992
(51) Int. Cl.: G05B 19/04

(54) **Steuerungsbaustein**

(30) Priorität: 11.10.1991 DE 4133636
(71) Anmelder: Lawrenz, Wolfhard, Prof. Dr.-Ing., D-38302 Wolfenbüttel (DE)
(72) Erfinder: Lawrenz, Wolfhard, Prof. Dr.-Ing., D-38302 Wolfenbüttel (DE)
(74) Vertreter: Lins, Edgar, Dipl.-Phys. Dr.jur.

(57) **Zusammenfassung**

Steuerungsbaustein zum Anschluß an Sensoren und/oder Aktoren eines gesteuerten Systems sowie an einen Datenbus (29) eines Netzwerks mit
- einem Mikroprozessor (2)
- einem fest programmierten Speicher (3) für ein Betriebsprogramm bzw. ein Teil-Anwendungsprogramm
- einem programmierbaren Speicher (4) zum Herunterladen von Anwendungsprogrammen
- einer Schnittstelle (5) für das Netzwerk
- einer Spannungsversorgung (6, 8)
- einem internen parallelen Bus (9), der den Mikroprozessor (2), den fest programmierten Speicher (3), den programmierbaren Speicher (4) und die Spannungsversorgung (6, 8) miteinander verbindet und
- wenigstens einem mit dem Mikroprozessor (2) fest verbundenen Steckersockel (S11, S21) zur Aufnahme und Kontaktierung wenigstens einer mit dem Aktor und/oder Sensor verbindbaren, angepaßten Signalaufbereitungs-Tochterplatine (17, 18; 17').

## Beschreibung

Die Erfindung betrifft einen Steuerungsbaustein zum Anschluß an Sensoren und/oder Aktoren eines gesteuerten Systems sowie an einen Datenbus eines Netzwerks.

Für die Steuerung insbesondere komplexerer Prozesse ist es zweckmäßig, eine zentrale Prozeßsteuerung durch verteilte Teil-Prozeßsteuerungen zu ersetzen und die Teil-Prozeßsteuerungen über ein Netzwerk miteinander zu verbinden. Die Teil-Prozeßsteuerungen arbeiten zusammen mit Sensoren, die Prozeßparameter erkennbar machen, und/oder Aktoren, die auf den Prozeß einwirken. Da die Teil-Prozeßsteuerungen regelmäßig nicht unabhängig voneinander sinnvoll sind, werden sie regelmäßig über ein Netzwerk miteinander verbunden, wobei über das Netzwerk Daten der Teil-Prozeßsteuerungen ausgetauscht werden und regelmäßig die Abläufe in dem Netzwerk mit einem Monitor-Rechner kontrollierbar, darstellbar und gegebenenfalls abspeicherbar sind.

Die die Teil-Prozeßsteuerung beinhaltenden Knoten des Netzwerkes müssen an die jeweilige Steuerungsaufgabe - und damit an die verwendeten Aktoren und/oder Sensoren - angepaßt sein. Ferner müssen die Knoten eine Netz-Schnittstelle sowie einen Mikroprozessor aufweisen, der die erhaltenen Daten in über das Netzwerk übertragbare Signale und über das Netzwerk erhaltene Befehle in Steuersignale für einen Aktor umsetzt. Die Implementierung dieser Knoten gestaltet sich teilweise recht aufwendig, da sie für jede Teil-Steuerungsaufgabe individuell erfolgt. Eine wirtschaftliche Aufteilung einer Prozeßsteuerung in Teil-Prozeßsteuerungen setzt daher häufig voraus, daß eine Vielzahl gleicher Steuerungsaufgaben benötigt werden. Ein Hauptanwendungsgebiet für Netzwerksteuerungen ist daher das Automobil, das in großen Stückzahlen hergestellt wird, so daß eine rationelle Fertigung der für das Netzwerk benötigten Knotenimplementierungen möglich ist.

Der Erfindung liegt die Aufgabe zugrunde, eine Implementierung von Teil-Prozeßsteuerungen, die über ein Netzwerk miteinander verbunden sind, so auszuführen, daß der damit verbundene Kostenaufwand vermindert wird. Diese Aufgabe wird gelöst durch einen Steuerungsbaustein zum Anschluß an Sensoren und/oder Aktoren eines gesteuerten Systems sowie an einen Datenbus eines Netzwerks mit
- einem Mikroprozessor
- einem fest programmierten Speicher für ein Betriebsprogramm bzw. ein Teil-Anwendungsprogramm
- einen programmierbaren Speicher zum Herunterladen von Anwendungsprogrammen
- einer Schnittstelle für das Netzwerk
- einer Spannungsversorgung
- einem internen parallelen Bus, der den Mikroprozessor, den fest programmierten Speicher, den programmierbaren Speicher und die Spannungsversorgung miteinander verbindet und
- wenigstens einem mit dem Mikroprozessor fest verbundenen Steckersockel zur Aufnahme und Kontaktierung wenigstens einer mit dem Aktor und/oder Sensor verbindbaren, angepaßten Signalaufbereitungs-Tochterplatine.

Das Konzept des erfindungsgemäßen Steuerungsbausteins besteht in einem modularen Aufbau, der so gewählt ist, daß für eine große Vielzahl von Steuerungsaufgaben die gleiche Architektur verwendet wird, wobei die Anpassung an die spezielle Steuerungsaufgabe mit Hilfe der wenigstens einen Signalaufbereitungs-Tochterplatine erfolgt, mit der die Verbindung zwischen dem Mikroprozessor und einem Aktor und/oder Sensor hergestellt wird. Für die Implementierung des Knotens steht somit ein Standard-Baustein zur Verfügung, der für die in Frage kommenden Anwendungsfälle in gleicher Weise - und damit kostengünstig - produzierbar ist und dessen Anpassung an die spezielle Steuerung über eine einsetzbare Signalaufbereitungs-Tochterplatine erfolgt. Der Aufbau der Signalaufbereitungs-Tochterplatine ist regelmäßig sehr einfach und kostengünstig, so daß der individuelle Aufwand für die Implementierung eines Knotens eines Netzwerks regelmäßig außerordentlich gering ist.

In einer Standardversion des erfindungsgemäßen Steuerungsbausteins ist dieser mit einem die komplette Kontaktierung des Bausteins beinhaltenden Steckersockel versehen. Der Steckersockel kann dabei vorzugsweise ein industriell genormtes Bauelement sein, so daß der Anschluß des gesteuerten Systems und des Netzwerk-Datenbus mit einem genormten Stecker erfolgen kann. Der Steckersockel kann dabei Signal- und gegebenenfalls Stromversorgungsverbindungen zu einem Aktor und/oder Sensor herstellen sowie eine Schnittstelle für das Netzwerk und die Stromversorgungsanschlüsse umfassen. Zusätzlich kann der Steckersockel noch Anschlüsse für Statussignale aufweisen. Ein geeigneter Steckersockel nach DIN 41612 weist beispielsweise 48 Kontakte auf.

In einer bevorzugten Ausführungsform des erfindungsgemäßen Steuerungsbausteins sind zwei mit dem Mikroprozessor verbundene Steckersockel zur Aufnahme wenigstens einer Signalaufbereitungs-Tochterplatine vorhanden. Diesen können zweckmäßigerweise zwei weitere Steckersockel zugeordnet sein, die mit dem die komplette Kontaktierung beinhalteten Steckersockel verbunden sind. In diese Anordnung werden vorzugsweise zwei Signalaufbereitungs-Tochterplatinen eingesetzt und bilden eine Standard-Konfiguration des erfindungsgemäßen Steuerungsbausteins. Dabei kann beispielsweise eine Signalaufbereitungs-Tochterplatine von einem Sensor kommende Signale für den Mikroprozessor aufarbeiten und die andere Signalaufbereitungs-Tochterplatine vom Mikroprozessor kommende Steuersignale zur Steuerung eines Aktors umsetzen.

In der Standard-Konfiguration ist - wie bereits erwähnt - ein Steckersockel vorhanden, der die komplette Kontaktierung des Steuerungsbausteins ermöglicht. Vorzugsweise ist neben diesem Steckersockel ein mit einer Standard-Schnittstelle verbundenes Steckerteil vorgesehen, das einen gesonderten Anschluß, beispielsweise eines Monitorrechners, erlaubt. Ferner kann neben dem die komplette Kontaktierung beinhalteten Steckersockel ein gesondertes Steckerteil vorgesehen sein, daß mit der Netzwerk-Schnittstelle verbunden ist. Diese Konfiguration mit den separaten Steckerteilen ist insbesondere von Vorteil, wenn nicht die Standard-Konfiguration mit zwei Signalaufbereitungs-Tochterplatinen gewählt wird sondern eine Konfiguration mit einer anwendungsangepaßten Signalaufbereitungs-Tochterplatine, die mit eigenen Anschlüssen zu einem Aktor und/oder Sensor ausgestattet ist. In diesem Fall kann der Steckersockel für die Kontaktierung des Steuerungsbausteins entfallen, da die Kontaktierung mit Sensor und/oder Aktor über die Signalaufbereitungs-Tochterplatine und die Kontaktierung mit dem Netz über die Netzwerk-Schnittstelle erfolgt. Vorzugsweise ist dabei ein weiterer Steckersockel für die Kontaktierung der Signalaufbereitungs-Tochterplatine vorgesehen, der wenigstens mit einer internen Stromversorgung und der Netzwerk-Schnittstelle verbunden ist. Dadurch ist es möglich, die individuelle Signalaufbereitungs-Tochterplatine gegebenenfalls mit komplexeren Funktionen auszustatten, die direkt auf das Netzwerk - und gegebenenfalls den Monitorrechner - übertragbar sind.

In einer vorteilhaften Ausführungsform des erfindungsgemäßen Steuerungsbausteins ist dieser mit Leuchtdioden für eine Statusanzeige versehen.

Ferner ist es zweckmäßig, an dem Steuerungsbaustein einen Miniatur-Schaltersatz vorzusehen, mit dem eine Kodierung des Bausteins erfolgt.

Vorteilhaft ist - jedenfalls in der Standard-Konfiguration des erfindungsgemäßen Steuerungsbausteins - eine für den Mikroprozessor erkennbare Kodierung der Signalaufbereitungs-Tochterplatinen, so daß der Mikroprozessor die Art der Signalaufbereitungs-Tochterplatinen erkennt und über seine I/O-Ports die geeigneten Eingangs- und Ausgangssignale für diese Tochterplatinen bereitstellt.

Der erfindungsgemäße Steuerungsbaustein ist vorzugsweise auf einer einzigen Grundplatine aufgebaut, die zweckmäßigerweise im Euro-Format ausgebildet ist, so daß eine vielseitige Verwendbarkeit des Steuerungsbausteins gegeben ist, sei es in einem eigenen Gehäuse, sei es in einem eigenen Gehäuse, sei es ohne Gehäuse oder als Einschub in einem Geräterahmen.

Die Erfindung soll im folgenden anhand von in der Zeichnung dargestellten Ausführungsbeispielen näher erläutert werden. Es zeigen:
- Figur 1 -: ein Blockschaltbild eines erfindungsgemäßen Steuerungsbausteins
- Figur 2 -: eine realistische Anordnung der Bauelemente des Steuerungsbausteins auf einer Platine
- Figur 3 -: eine schematische Darstellung einer Signalaufbereitungs-Tochterplatine
- Figur 4 -: eine galvanisch entkoppelte Signalaufbereitungs-Tochterplatine
- Figur 5 -: eine thematische Darstellung einer Prozeßsteuerung mit einer Vielzahl von erfindungsgemäßen Steuerungsbausteinen, wobei ein Prozeßmonitor an einen Baustein direkt angeschlossen ist
- Figur 6 -: eine Darstellung gemäß Figur 5 mit einem Anschluß des Prozeßmonitors an den Datenbus des Netzwerks über eine eigene Netz-Schnittstelle
- Figur 7 -: eine Darstellung gemäß Figur 5 mit einem Anschluß eines Prozeßmonitors an einen Prozeßadapter eines Steuerungsbausteins
- Figur 8 -: eine schematische Darstellung einer applikationsspezifischen Signalaufbereitungs-Tochterplatine
- Figur 9 -: eine schematische Darstellung einer Steuerung mit Steuerungsbausteinen mit applikationsspezifischen Tochterplatinen
- Figur 10 -: eine schematische Darstellung der Ankopplung einer applikationsspezifischen Tochterplatine über eine Anpassungsplatine
- Figur 11 -: eine schematische Darstellung der Ankopplung eines erfindungsgemäßen Steuerungsbausteins mit einer applikationsspezifischen Signalaufbereitungs-Tochterplatine in direkter Ankopplung an den Prozeß und an das Netzwerk
- Figur 12 -: eine schematische Darstellung eines erfindungsgemäßen Steuerungsbausteins in Standard-Konfiguration mit einer externen Signalanpassungs-Platine und deren Ankopplung an das Netzwerk und an den zu steuernden Prozeß
- Figur 13 -: eine schematische Darstellung einer Anwendungsvariante mit externen, über einen parallelen Signalbus gesteuerten Signalanpassungs-Platinen.

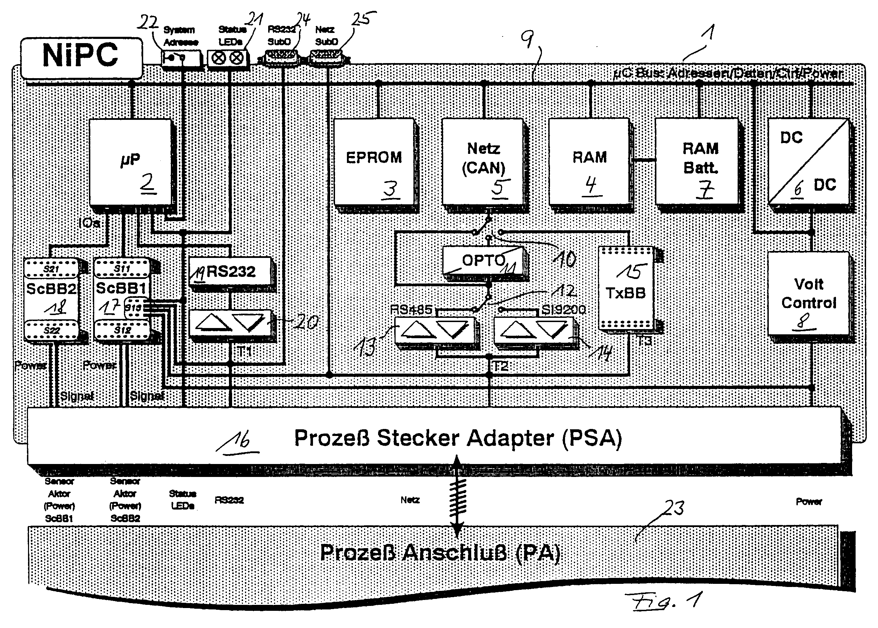

Figur 1 läßt eine Grundplatine 1 erkennen, auf der in einer festen Anordnung ein Mikroprozessor 2, ein fest programmierter Speicher 3 (EPROM), ein programmierbarer Speicher 4 (RAM), eine Netzwerk-Schnittstelle 5 und eine Spannungsversorgung 6 angeordnet sind.

Zu dem programmierbaren, flüchtigen Speicher 4 gehört eine Pufferbatterie 7. Mit der Spannungsversorgung 6 ist ein Spannungsregler 8 verbunden. Die genannten Bauelemente sind mit einem gemeinsamen internen Bus 9 verbunden, über den Adressen, Daten, Steuersignale und die Stromversorgung übertragen werden.

Die Pufferbatterie 7 übernimmt die Stromversorgung für den flüchtigen Speicher 4, wenn die Spannungsversorgung auf dem Bus 9 ausfällt, um so das in den Speicher 4 heruntergeladene Anwendungsprogramm bei einem Netzausfall zu schützen. Die Netzwerk-Schnittstelle 5 kann durch einen Umschalter 10 direkt oder über einen Opto-Koppler 11 mit einem Umschalter 12 auf einen ersten Anpassungsbaustein 13 (RS 485) oder einen zweiten Anpassungsbaustein 14 (SI 9200) gelangen. Die Ausgänge der beiden Anpassungsbausteine 13, 14 sind zu einem Ausgang T2 zusammengeschaltet. Mit diesem Ausgang ist ferner eine Transceiver-Tochterplatine 15 verbunden, deren Eingang mit einem dritten Kontakt des Umschalters 10 verbunden ist. Demzufolge kann die Netzwerk-Schnittstelle 5 direkt über die Transceiver-Tochterplatine 15 mit dem Anschluß T2 verbunden sein.

Die Signal-Eingänge/-Ausgänge des Mikroprozessors 2 sind mit zwei Steckersockel S11, S21 verbunden, denen jeweils ein weiterer Steckersockel S12, S22 zugeordnet ist. Die Steckersockel S12 und S22 sind fest mit einem die komplette Kontaktierung des Steuerungsbausteins umfassenden Steckersockel 16 (PSA) verbunden.

Mit den Steckersockeln S11, S12 bzw. S21, S22 sind jeweils eine Signalaufbereitungs-Tochterplatine 17, 18 (ScBB) kontaktiert. Unterhalb der ersten der Signalaufbereitungs-Tochterplatine 17 befindet sich ein weiterer Steckersockel S13, dessen Funktion unten näher erläutert wird.

Mit dem Ausgang des Mikroprozessors 2 ist ferner eine Standard-Schnittstelle 19 (RS 232) verbunden, deren Ausgang über einen I/O-Verstärker 20 einen Anschluß T1 bildet.

Eine weitere Ausgangsleitung des Mikroprozessors 2 führt Statusinformationen über den Steuerungsbaustein, die in einer Leuchtdiodenanordnung 21 sichtbar gemacht werden. Ein Miniatur-Tastenfeld 22 erlaubt die Eingabe einer Identifizierung in Form einer Adresse des betreffenden Steuerungsbausteins in den Mikroprozessor 2.

Der Steckersockel S13 ist mit einer Eingangsleitung der Spannungsregelung 8, den Anschlüssen T1 und T2 sowie mit der Ausgangsleitung für die Statusinformationen verbunden. Auf diese Weise erhält der Steckersockel S13 alle Anschlüsse - mit Ausnahme der Verbindungen zu den Aktoren/Sensoren - unabhängig von dem Steckersockel 16.

Über den Steckersockel 16 wird dem Steuerungsbaustein die Stromversorgung zugeführt. Der Steckersockel 16 stellt ferner die Verbindung zu dem Netzwerk und zu den Sensoren/Aktoren her und ist mit der Standard-Schnittstelle 19 und dem Statussignal-Ausgang des Mikroprozessors 2 verbunden. Mit dem Steckersockel 16 (PSA) ist ein Prozeßanschluß 23 verbindbar, der seinerseits mit Aktoren/Sensoren und dem Netzwerk verbunden ist.

Der in Figur 1 dargestellte Steuerungsbaustein weist ferner Steckerteile 24 und 25 auf, die separat mit der Standard-Schnittstelle 19 am Anschluß T1 bzw. der Netz-Schnittstelle 5 am Anschluß T2 verbunden sind.

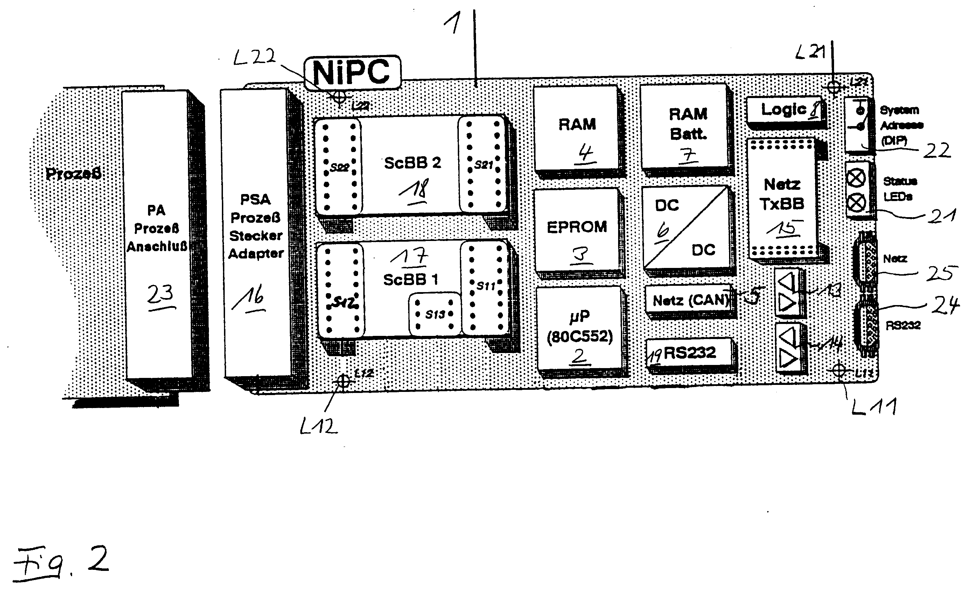

Figur 2 zeigt ein mögliches Layout für einen Steuerungsbaustein gemäß Figur 1.

An den schmalen, gegenüberliegenden Seiten der Grundplatine 1 befinden sich der Steckersockel 16 (PSA) auf der einen Seite und die Steckerteile 24, 25 für die Standard-Schnittstelle und die Netz-Schnittstelle sowie die Leuchtdiodenanordnung 21 und das Miniatur-Tastenfeld 22 auf der anderen Seite.

An den Steckersockel 16 (PSA) schließen sich in Längsrichtung der Platine 1 nebeneinander die beiden Signalaufbereitungs-Tochterplatinen 17, 18 an. Es folgen in Dreier-Anordnungen nebeneinander Mikroprozessor 2, fest programmierter Speicher 3 und programmierbarer Speicher 4. Dahinter sind nebeneinander angeordnet die Pufferbatterie 7, die Spannungsversorgung 6 sowie die weniger Platz beanspruchenden Netz-Schnittstelle 5 und Standard-Schnittstelle 19. Zwischen den letztgenannten Bauelementen und der Randbestückung 21, 22, 24, 25 der Platine 1 befindet sich der Spannungsregler 8, die Transceiver-Tochterplatine 15 sowie die Anpassungsbausteine 13, 14.

Aufgrund dieser Anordnung stehen für die Signalaufbereitungs-Tochterplatinen jeweils nur ein begrenzter Platz zur Verfügung, wenn diese über die Seitenabmessungen der Grundplatine 1 nicht hinausragen sollen, beispielsweise wegen eines entsprechenden Gehäuses oder eines entsprechenden Einschubraumes. Dieser Platz für die Signalaufbereitungs-Tochterplatinen ist im Regelfall völlig ausreichend, so daß die Grundplatine 1 bei dieser Anordnung im Euro-Format ausgeführt sein kann.

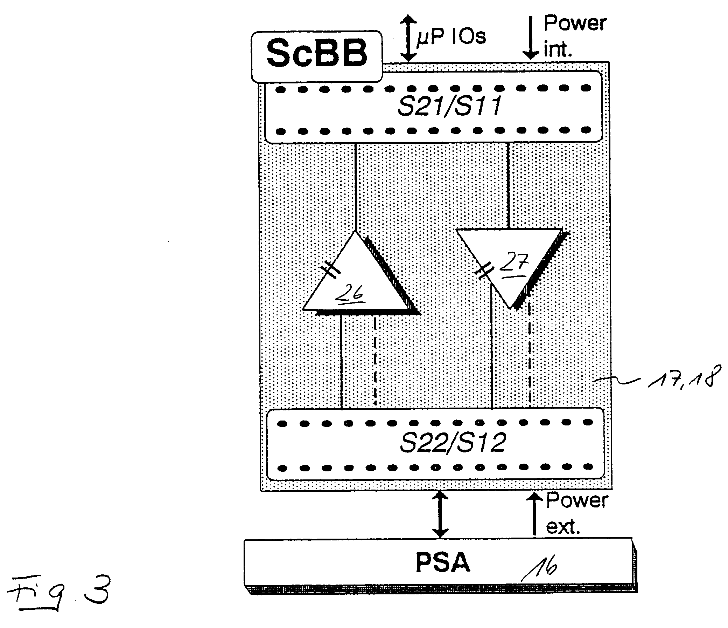

Figur 3 zeigt eine Standard-Konfiguration für Signalaufbereitungs-Tochterplatinen 17, 18, die eine Signalanpassung für die Signale von einem Sensor zum Mikroprozessor 2 bzw. von dem Mikroprozessor 2 zu einem Aktor mit Hilfe geeigneter Verstärker 26, 27 vornehmen. Über die Signalaufbereitungs-Tochterplatinen 17, 18 kann darüber hinaus eine Stromversorgung für die Sensoren/Aktoren geleitet werden.

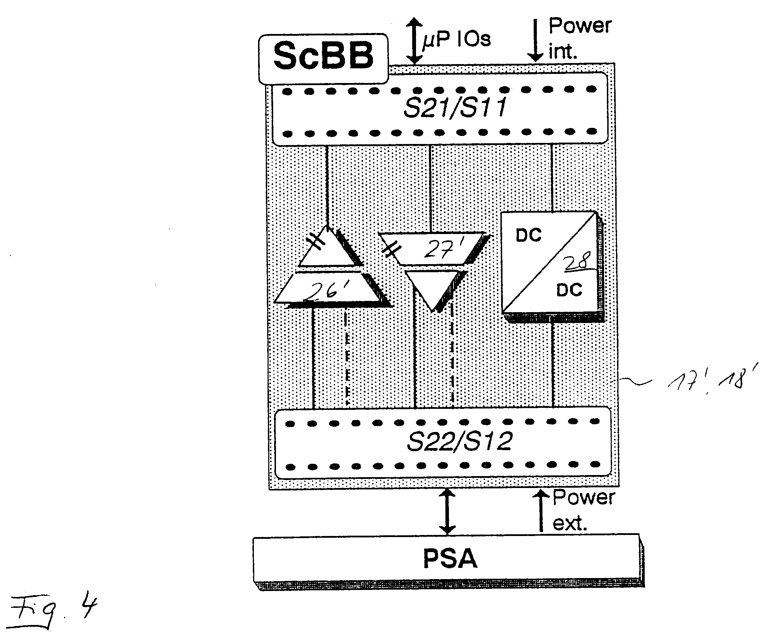

Figur 4 zeigt ein Beispiel für eine Signalaufbereitungs-Tochterplatine 17', 18', bei der die Verstärker 26', 27' für eine galvanische Trennung zwischen Mikroprozessor 2 und Aktoren/Sensoren sorgen. Die galvanische Trennung kann auch für die Spannungsversorgung über einen DC/DC-Wandler 28 gewährleistet werden.

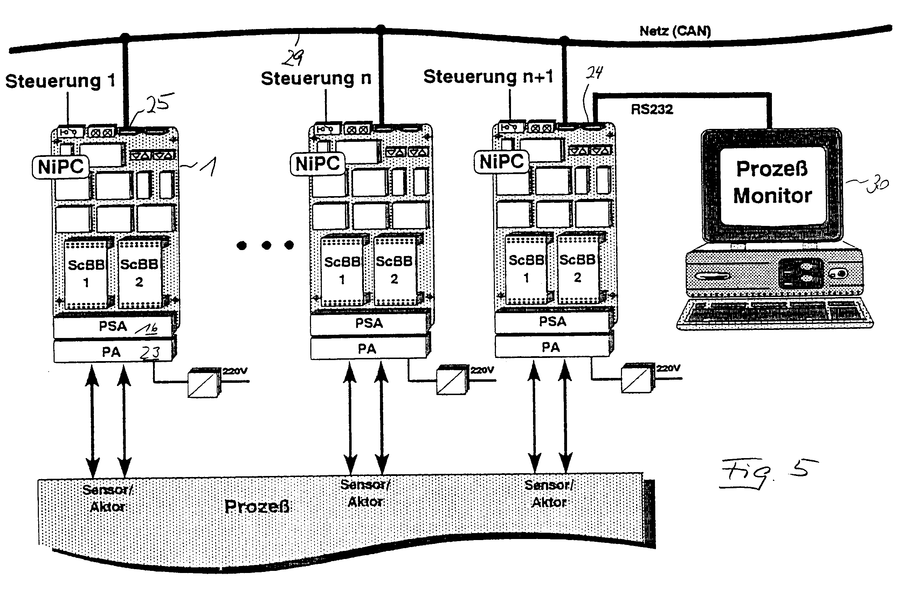

Figur 5 zeigt den Aufbau einer Prozeßsteuerung mit einer Mehrzahl von gemäß Figur 1 beschalteten Grundplatinen 1, die jeweils über die Steckerteile 25 - also ihre Netz-Schnittstelle 5 - mit einem Netzwerk-Datenbus 29 verbunden sind. Die Platine N+1 ist ferner über das Steckerteil 24, also die Standard-Schnittstelle 19 mit einem Prozeßmonitor 30 verbunden. Über diesen können die Vorgänge im Prozeß und im Netz verfolgt und durch Änderung von Randbedingungen beeinflußt werden. Über den Prozeßmonitor 30 können ferner die jeweiligen Anwendungsprogramme in den programmierbaren Speicher 4 der einzelnen Steuerungsbaustein heruntergeladen werden.

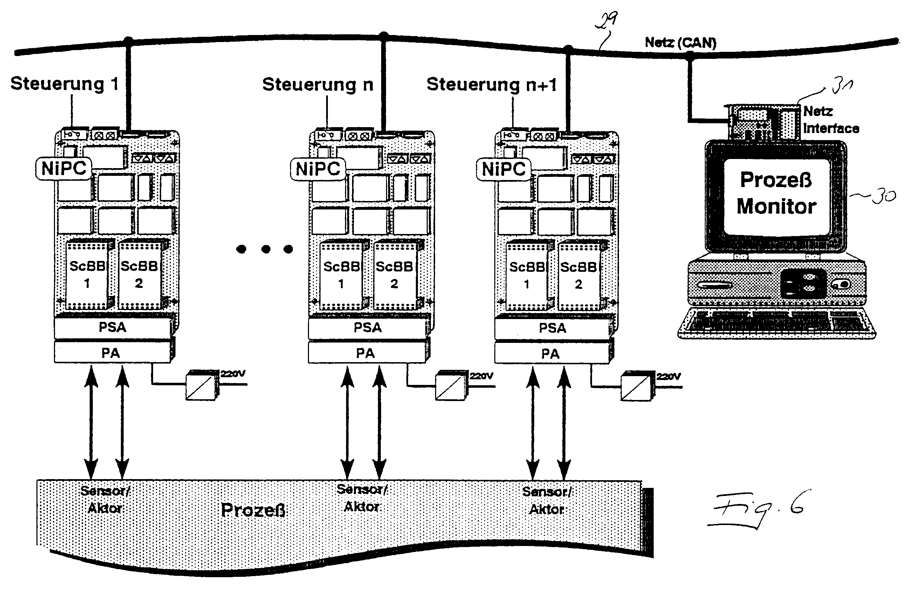

Figur 6 zeigt eine Variante der Steuerung gemäß Figur 5, bei der der Prozeßmonitor 30 über eine eigene Netz-Schnittstelle 31 mit dem Netzwerk-Datenbus 29 verbunden ist.

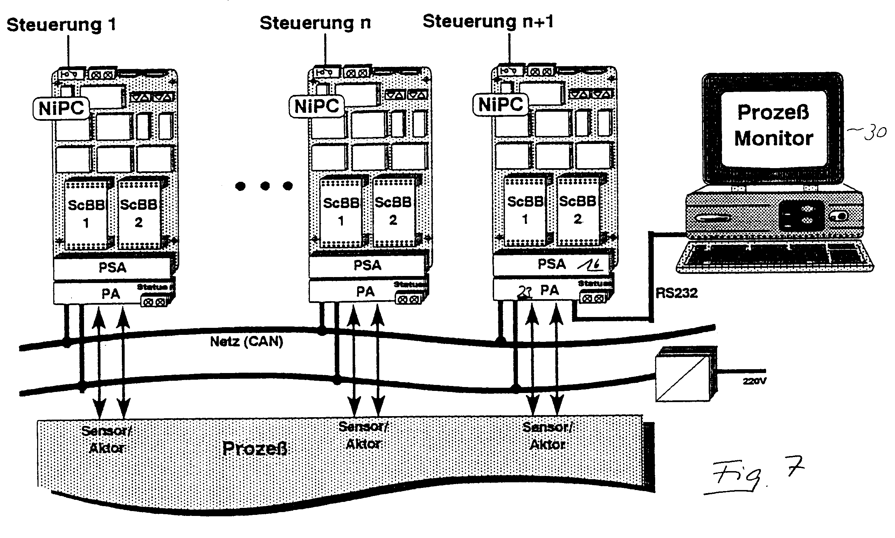

Bei der in Figur 7 dargestellten Variante ist der Prozeßmonitor 30 über den Prozeßadapter 23 und den Steckersockel 16 mit der Steuerung N+1 verbunden.

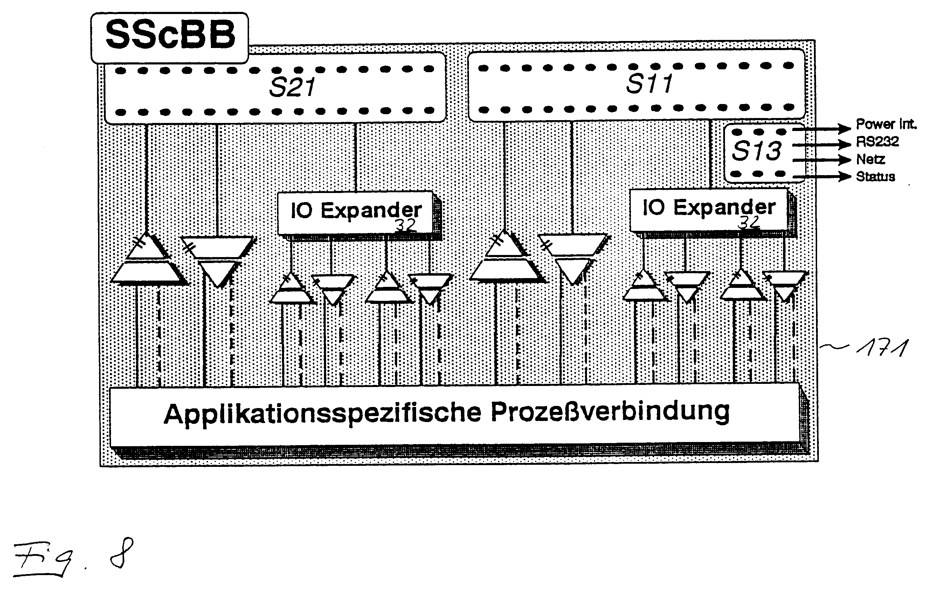

Figur 8 zeigt eine applikationsspezifische Signalaufbereitungs-Tochterplatine 171, die zur Seite des Mikroprozessors 2 hin über die Steckersockel S21, S11 und S13 verbunden ist. Die Signalaufbereitungs-Tochterplatine 171 weist eigene Ein- und Ausgänge zu Sensor und Aktor auf, wobei weitere Signalpfade über gemultiplexte I/O-Expander 32 realisiert werden.

Die physikalische Größe dieser applikationsspezifischen Signalaufbereitungs-Tochterplatine 171 ist nicht festgelegt. Gegebenenfalls kann sie sowohl in der Breite als auch in der Länge über die Grundplatine 1 hinausragen. Dadurch kann eine beliebig komplexe und großflächige Prozeßanpassung erfolgen. Insbesondere können beispielsweise sehr große Zahlen von Sensor/Aktor-Eingängen realisiert werden.

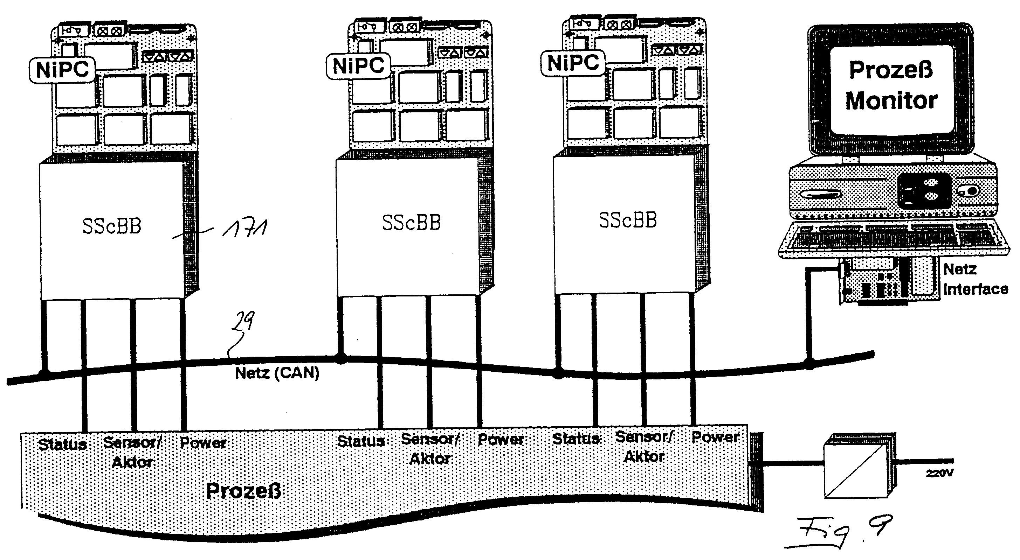

Figur 9 zeigt eine Prozeßsteuerung mit Steuerungsbausteinen mit anwendungsspezifischen Signalaufbereitungs-Tochterplatinen 171, die ihre Ankopplung zum Netzwerk-Datenbus 29 und zum Prozeß, also insbesondere zu den Sensoren/Aktoren, aufweisen.

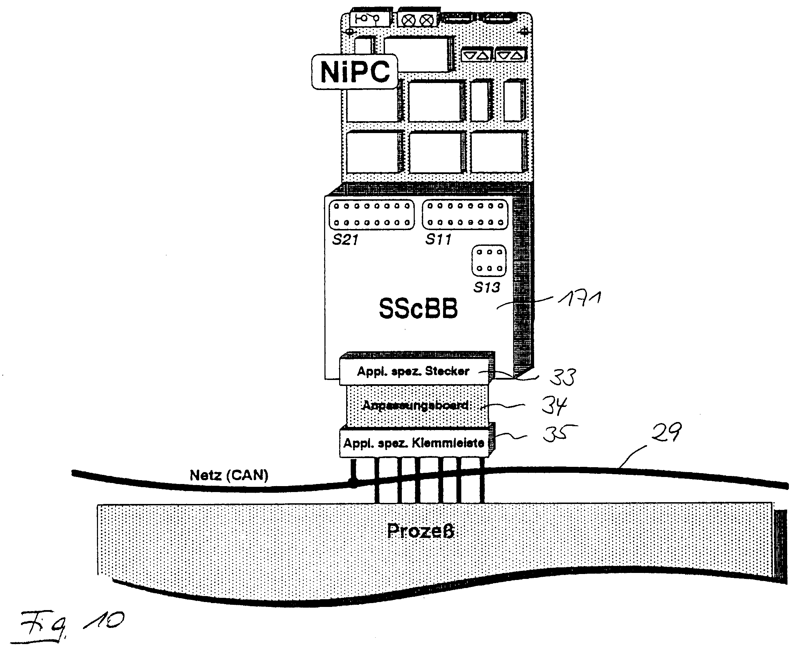

In der Variante der Figur 10 sind die applikationsspezifischen Signalaufbereitungs-Tochterplatinen 171 über einen applikationsspezifischen Stecker 33 mit einer Anpassungsplatine 34 verbunden, deren Ankopplung an den Prozeß über eine applikationsspezifische Klemmleiste 35 erfolgt.

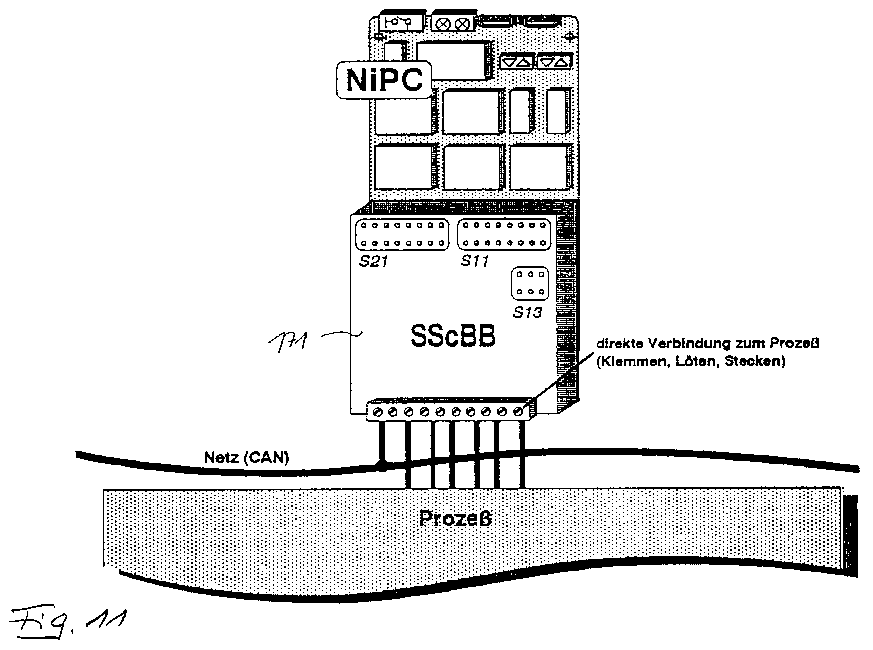

In der Variante der Figur 11 erfolgt eine direkte Verbindung der applikationsspezifischen Signalaufbereitungs-Tochterplatine 171 zum Prozeß durch Klemm-, Löt- oder Steckverbindungen.

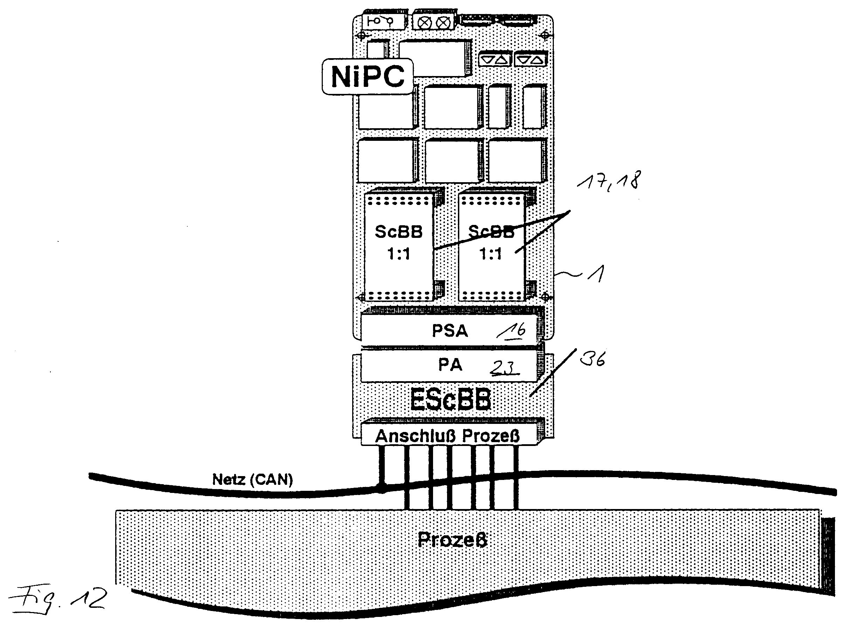

Figur 12 zeigt eine weitere Variante der Signalankopplung. Der Steuerungsbaustein auf der Grundplatine 1 weist zwei Signalanpassungs-Tochterplatinen 17, 18 auf, die im wesentlichen eine 1:1 Weiterleitung der I/O-Signale des Mikroprozessors 2 bewirken. Eine auf den Prozeßadapter 23 aufgesteckte externe Signalaufbereitung-Platine 36 besorgt eine spezifische Anpassung der Sensor/Aktor-Signale zum Prozeß. Die externe Platine 36 kann beliebige physikalische Ausmaße annehmen und beliebige Signalmengen behandeln. Sie stellt somit eine Variante der applikationsspezifischen Signalaufbereitungs-Tochterplatinen 171 dar.

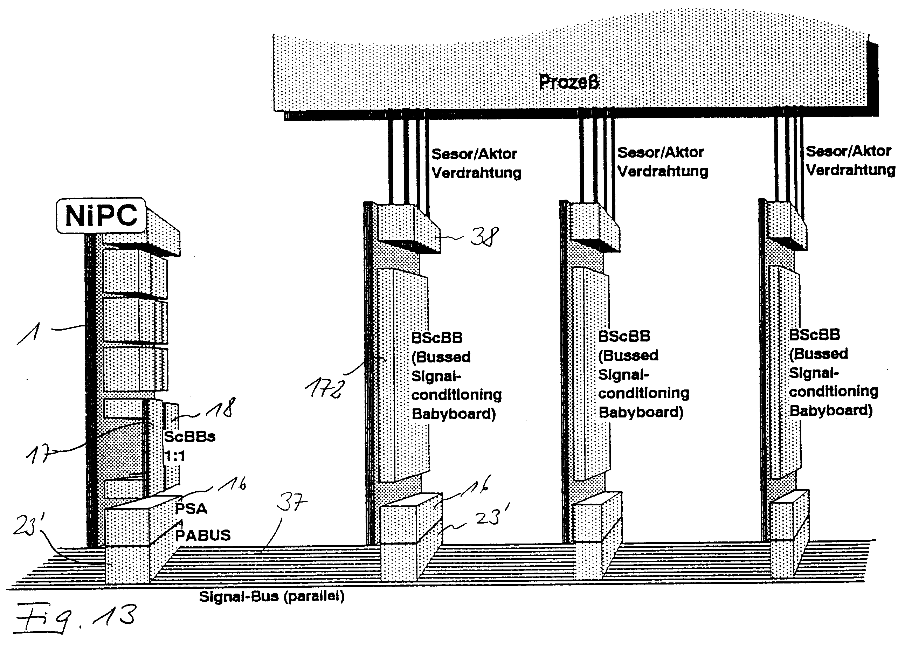

Eine weitere Variante der Signalankopplung ist in Figur 13 dargestellt und erfolgt über einen Signal-Bus 37. Eine Prozessor-Grundplatine 1 versorgt über im wesentlichen 1:1 durchleitende Signalaufbereitungs-Tochterplatinen 17, 18 den zugehörigen Steckersockel 16 (PSA) mit den digitalen/analogen Ein-/Ausgangssignalen des Mikroprozessors 2 sowie mit den weiteren Ausgangssignalen der Netzwerk-Schnittstelle 5, der Standard-Schnittstelle 19, den Statussignalen des Mikroprozessors und mit der Versorgungsspannung. An den Steckersockel 16 ist ein PA-Busverbinder 23' angeschlossen, der die genannten Signale als parallele Signale weiteren Signalaufbereitungs-Platinen 172 (BScBB) über Steckverbindungen 23', 16 zugänglich macht. Jede der Signalaufbereitungs-Platinen 172 kann z. B. über Expander oder auch direkte Signalverbindungen die entsprechenden Signale über geeignete Sensor/Aktoranpassungen 38 dem Prozeß bereitstellen. Der Signal-Bus 37 ermöglicht einen flexiblen, modularen Aufbau. Die Signalaufbereitungs-Platinen 172 stellen ebenfalls eine Realisierungsvariante der applikationsspezifischen Signalaufbereitungs-Tochterplatinen 171 dar.

In allen Ausführungsbeispielen können die Steckersockel 16 industriell genormte Bauelemente sein und vorzugsweise insgesamt 48 Pole aufweisen. Diese können vorgesehen sein für
- jeweils 4 x 4 Signalleitungen plus fakultative Versorgungsleitungen für die Signalaufbereitungs-Tochterplatinen 17, 18
- Statusleitungen
- Anschlüsse für die Standard-Schnittstelle 19
- Anschlüsse für die Netzwerk-Schnittstelle 5
- Anschlüsse für die Spannungsversorgung.

Mit dem Steckersockel 16 wird die mögliche Zahl der Signalleitungen für die Standard-Konfiguration festgelegt. Eine Erweiterung ist durch die anwendungsspezifischen Signalaufbereitungs-Tochterplatinen 17' möglich, die bei Verwendung desselben Mikroprozessors über Expander o. ä. eine beliebige Vielzahl von Ausgangsanschlüssen aufweisen können.

## Patentansprüche

1. Steuerungsbaustein zum Anschluß an Sensoren und/oder Aktoren eines gesteuerten Systems sowie an einen Datenbus (29) eines Netzwerks mit
- einem Mikroprozessor (2)
- einem fest programmierten Speicher (3) für ein Betriebsprogramm bzw. ein Teil-Anwendungsprogramm
- einem programmierbaren Speicher (4) zum Herunterladen von Anwendungsprogrammen
- einer Schnittstelle (5) für das Netzwerk
- einer Spannungsversorgung (6, 8)
- einem internen parallelen Bus (9), der den Mikroprozessor (2), den fest programmierten Speicher (3), den programmierbaren Speicher (4) und die Spannungsversorgung (6, 8) miteinander verbindet und
- wenigstens einem mit dem Mikroprozessor (2) fest verbundenen Steckersockel (S11, S21) zur Aufnahme und Kontaktierung wenigstens einer mit dem Aktor und/oder Sensor verbindbaren, angepaßten Signalaufbereitungs-Tochterplatine (17, 18; 17').

2. Steuerungsbaustein nach Anspruch 1 mit einem die komplette Kontaktierung des Bausteins beinhaltenden Steckersockel (16).

3. Steuerungsbaustein nach Anspruch 2, bei dem der Steckersockel (16) Signal- und gegebenenfalls Stromversorgungsverbindungen zu einem Aktor und/oder Sensor herstellt sowie eine Schnittstelle für das Netzwerk und die Stromversorgungsanschlüsse umfaßt.

4. Steuerungsbaustein nach Anspruch 3, bei dem der Steckersockel (16) ferner Anschlüsse für Statussignale aufweist.

5. Steuerungsbaustein nach einem der Ansprüche 1 bis 4 mit zwei mit dem Mikroprozessor (2) verbundenen Steckersockeln (S11, S21) zur Aufnahme wenigstens einer Signalaufbereitungs-Tochterplatine (17, 18; 17').

6. Steuerungsbaustein nach einem der Ansprüche 2 bis 4 und Anspruch 5 mit zwei weiteren Steckersockeln (S12, S22) zur Aufnahme wenigstens einer Signalaufbereitungs-Tochterplatine (17, 18; 17'), die mit dem die komplette Kontaktierung beinhaltenden Steckersockel (16) verbunden sind.

7. Steuerungsbaustein nach Anspruch 6, bei dem zwei Signalaufbereitungs-Tochterplatinen (17, 18) in die Steckersockel (S11, S12; S21, S22) eingesetzt sind.

8. Steuerungsbaustein nach einem der Ansprüche 2 bis 7, bei dem neben dem die komplette Kontaktierung beinhaltenden Steckersockel ein mit einer Standard-Schnittstelle (19) verbundenes Steckerteil (24) vorgesehen ist.

9. Steuerungsbaustein nach einem der Ansprüche 2 bis 8, bei dem neben dem die komplette Kontaktierung beinhaltenden Steckersockel (16) ein mit der Netzwerk-Schnittstelle (5) verbundenes Steckerteil (25) vorgesehen ist.

10. Steuerungsbaustein nach einem der Ansprüche 1 bis 9, bei dem eine Miniatur-Schalteranordnung (22) zur Kodierung des Bausteins vorgesehen ist.

11. Steuerungsbaustein nach einem der Ansprüche 1 bis 10 mit Leuchtdioden (21) für eine Statusanzeige.

12. Steuerungsbaustein nach einem der Ansprüche 1 bis 11 mit einem weiteren Steckersockel (S13) für die Kontaktierung einer Signalaufbereitungs-Tochterplatine (17'), der wenigstens mit einer internen Stromversorung und der Netzwerk-Schnittstelle (5) verbunden ist.

13. Steuerungsbaustein nach Anspruch 12, bei dem die Signalaufbereitungs-Tochterplatine (17') mit eigenen Anschlüssen zu einem Aktor und/oder Sensor ausgestattet ist.

14. Steuerungsbaustein nach einem der Ansprüche 1 bis 13, bei dem die Signalaufbereitungs-Platinen (17, 18; 17') mit einem für den Mikroprozessor (2) erkennbaren Code versehen sind.

15. Steuerungsbaustein nach einem der Ansprüche 1 bis 14, der auf einer Grundplatine (1) aufgebaut ist.

16. Steuerungsbaustein nach Anspruch 15, bei dem die Grundplatine (1) das Euro-Format aufweist.
